# EUROPÄISCHE PATENTSCHRIFT

(11) **EP 1 854 667 B1**
(45) Veröffentlichungstag und Bekanntmachung des Hinweises auf die Patenterteilung: **02.07.2008**
(21) Anmeldenummer: 07009273.9
(22) Anmeldetag: 09.05.2007
(51) Int. Cl.: B60Q 1/26, B60R 1/12, G02B 6/00

(54) **Leuchteneinheit und Aussenspiegel mit einer Leuchteneinheit**
Lamp unit and outside rear view mirror with a lamp unit
Dispositif d'éclairage et rétroviseur extérieur avec un dispositif d'éclairage

(30) Priorität: 11.05.2006 DE 102006022990
(43) Veröffentlichungstag der Anmeldung: 14.11.2007
(73) Patentinhaber: Visiocorp Patents S.à.r.l., 2346 Luxembourg (LU)
(72) Erfinder: Geiger, Uwe, 89558 Böhmenkirchen (DE); Gläser, André, 73728 Esslingen (DE)
(74) Vertreter: Rausch, Gabriele

(56) Entgegenhaltungen:
- EP-A- 1 653 150
- WO-A-03/034125
- DE-A1- 10 234 110
- DE-A1- 10 356 483
- DE-A1- 19 939 087
- DE-A1-3102005 019 09
- US-A1- 2002 172 053

## Beschreibung

Die Erfindung betrifft eine Leuchteneinheit und einen Außenspiegel mit einer Leuchteneinheit nach den Oberbegriffen der unabhängigen Ansprüche.

Außenspiegel, in die eine Lichtfunktion in Form eines Blinkersignals integriert ist, sind bekannt. Dazu ist in einer nach vorne weisenden Rückwand des Spiegelgehäuses ein Blinkermodul als Leuchteneinheit integriert. An bestimmten Bereichen einer derartigen Leuchteneinheit sind häufig gesetzliche Normen hinsichtlich der Helligkeit der Leuchteneinheit zu erfüllen. Gleichzeitig sind Leuchteneinheiten ein wichtiges Designelement, das einem Fahrzeug ein "Gesicht" verleiht, mit dem ein Automobilhersteller sein Produkt oder seine Produktfamilie dem Kunden gegenüber erkennbar machen möchte.

Die US 2002/172053 offenbart eine Blinkleuchteneinheit im Außenspiegel, bei der Lichtleiter eingesetzt sind. An jeweils einem Ende einer Mehrzahl von Lichtleitern wird Licht eingekoppelt. Das eingekoppelte Licht wird in den Lichtleitern zu einer gemeinsamen großflächigen Lichtaustrittsfläche geführt, dort aufgefächert und breitflächig abgestrahlt. Die Lichtaustrittsfläche erstreckt sich flächig über zwei Seitenwände der Blinkleuchteneinheit.

Aufgabe der Erfindung ist es, eine Leuchteneinheit eines Fahrzeugs anzugeben, bei der mit großer Gestaltungsfreiheit die funktionellen und gesetzgeberisch geforderten Eigenschaften sichergestellt werden können. Ferner soll ein Außenspiegel mit einer derartigen Leuchteneinheit geschaffen werden.

Die Aufgabe wird erfindungsgemäß durch die Merkmale der unabhängigen Ansprüche gelöst. Günstige Ausgestaltungen und Vorteile der Erfindung ergeben sich aus den weiteren Ansprüchen und der Beschreibung.

Die erfindungsgemäße Blinksignaleinheit mit einem oder mehreren Leuchtmitteln, insbesondere eine für einen Außenspiegel eines Fahrzeugs, umfasst wenigstens zwei Lichtleiterabschnitte mit jeweils einem ersten Ende und einem zweiten Ende, die an einem der Enden in einem Knotenpunkt zusammengeführt sind, der einen Auskoppelbereich bildet, in dem Licht austritt, das in den Lichtleiterabschnitten zum Knotenpunkt geführt ist. Dabei weist wenigstens einer der Lichtleiterabschnitte einen Einkoppelpunkt für ein Leuchtmittel entfernt vom Knotenpunkt auf. Das Leuchtmittel kann geschützt von äußeren Einflüssen angeordnet werden und stört das Erscheinungsbild der Leuchteneinheit nicht. Der Lichtleiterabschnitt weist zwischen Einkoppelpunkt und Knotenpunkt mehrere Auskoppelbereiche auf, die in solchen Abständen aufeinander folgen, dass ein im Wesentlichen homogener Helligkeitseindruck zwischen Einkoppelpunkt und Knotenpunkt entsteht. Die Abstände der Auskoppelbereiche können beispielsweise im Millimeterabstand, vorzugsweise im Abstand von etwa 1 mm, aufeinander folgen. Die Auskoppelbereiche liegen vorzugsweise an einer Oberseite der Leuchteneinheit, wenn eine Abstrahlung von Licht von der Oberseite erwünscht ist. Gegebenenfalls können die Auskoppelbereiche jedoch beliebig an der Außenfläche der Lichtleiterabschnitte vorgesehen sein. Typischerweise können Auskoppelbereiche bei Lichtleitern durch eine entsprechende Modifikation der Oberfläche des Lichtleiters, an dem das innerhalb des Lichtleiters geführte Licht totalreflektiert wird, gebildet werden, so dass wenigstens ein Teil des Lichts den Lichtleiter an dieser Stelle verlassen und nur ein Teil in den Lichtleiter zurückreflektiert wird. Derartige Modifikationen sind dem Fachmann generell aus dem Gebiet der Lichtleitertechnik bekannt.

Vorteilhaft kann der Knotenpunkt an einer Stelle der Leuchteneinheit vorgesehen sein, die eine zuverlässig hohe Lichtabgabe erfordert. Die Lichtleiterabschnitte können beliebig gestaltet und teilweise verdeckt und/oder offen geführt sein. Als Lichtleiter soll ein Element verstanden werden, bei dem Licht, das vom Leuchtmittel eingebracht wird, nicht einfach durch das Element in direkter Ausbreitungsrichtung des Lichts transmittiert wird wie bei einer Lichtscheibe, sondern innerhalb des Elements durch Totalreflexion in einen Auskoppelbereich geleitet wird, der entfernt vom Einkoppelbereich des Lichts liegt und entfernt von einem theoretischen Austrittspunkt, aus dem das eingestrahlte Licht in direkter Ausbreitungsrichtung theoretisch austreten würde. Besonders geeignet ist die Leuchteneinheit für lichtemittierende Dioden (LED) als Leuchtmittel. Es können jedoch auch Glühlampen oder andere geeignete Leuchtmittel vorgesehen sein. Die Lichtleiterabschnitte können vorzugsweise in einem Gehäuse angeordnet sein, das zur besseren Einkopplung des Lichts auch bedampft sein kann. Ferner ist gerade beim Einsatz von LEDs vorteilhaft, dass auf teure LED-Kühlkörper und einer aufwändige Elektronik und/oder Ansteuerung der LEDs verzichtet werden kann. Die LEDs können günstig auf einer gemeinsamen Platine angeordnet sein, die je nach Einkopplungsart, verfügbarem Bauraum und dergleichen, gestaltet sein kann.

Bevorzugt ist der Einkoppelpunkt an dem Ende angeordnet, welches vom Knotenpunkt entfernt ist.. Dann wird das Licht, oder wenigstens ein signifikanter Anteil davon, vom ersten Ende zum zweiten Ende, welches bevorzugt den Knotenpunkt bildet, innerhalb des Lichtleiterabschnitts transportiert. Es kann jedoch auch wenigstens ein Einkoppelpunkt für ein Leuchtmittel senkrecht zu einer Längserstreckung zwischen dem ersten und zweiten Ende des Lichtleiterabschnitts vorgesehen sein.

Mit Vorteil ist die Leuchteneinheit so gestaltet, dass die Helligkeit am Knotenpunkt mindestens gleich ist wie an einzelnen Auskoppelbereichen am Lichtleiterabschnitt, bevorzugt ist sie am Knotenpunkt größer als an den anderen Auskoppelbereichen entlang des Lichtleiterabschnitts.

Eine vorteilhafte Gestaltung ergibt sich, wenn zwei Lichtleiterabschnitte in einer Ebene liegen und ein dritter Lichtleiterabschnitt unterhalb der Ebene verläuft und im Knotenpunkt mit den anderen Lichtleiterabschnitten verbunden ist. Im Einbauzustand kann der dritte Lichtleiterabschnitt verdeckt sein, beispielsweise durch ein dekoratives Abdeckelement, und ein überraschender Effekt durch eine hohe Intensität bei der Lichtabgabe am Knotenpunkt erreicht werden.

Das Leuchtmittel kann am Einkoppelpunkt in seiner Lichtaustrittsrichtung entlang seiner optischen Achse direkt in eine Stirnseite des Lichtleiterabschnitts einstrahlen. Diese Ausgestaltung ist besonders einfach und geeignet dann, wenn Streuverluste beim Einkoppeln des Lichts nicht stören. Zusätzlich oder alternativ kann vorgesehen sein, dass das Leuchtmittel oder ein anderes Leuchtmittel am Einkoppelpunkt in eine Stirnseite des Lichtleiterabschnitts hineinragt.

Ebenso kann das Leuchtmittel sein Licht am Einkoppelpunkt über einen Reflektor in eine Stirnseite des Lichtleiterabschnitts einstrahlen.

Das Leuchtmittel kann zusätzlich oder alternativ am Einkoppelpunkt in Lichtleitermaterial hineinragen, das an den Lichtleiterabschnitt angrenzt ist. Diese Ausgestaltung vermeidet Einkoppelverluste besonders effektiv. Das Lichtleitermaterial kann als Einkoppeloptik am betreffenden Lichtleiterabschnitt angeordnet sein, insbesondere angeformt, und/oder Bestandteil des Leuchtmittels sein. So können LEDs beispielsweise einfach mit einer geeigneten Einkoppeloptik umgeben, insbesondere umspritzt werden.

Die jeweils geeignete Art der Einkopplung des Lichts kann daher weitgehend bedarfsgerecht ausgewählt werden.

Ein erfindungsgemäßer Außenspiegel eines Fahrzeugs mit einer im montierten Zustand nach rückwärts gerichteten Öffnung in einem Gehäuse mit einem Hohlraum, in den ein Spiegel aufnehmbar ist, sowie eine nach vorne gerichtete, den Hohlraum begrenzende Rückwand mit einer Außenfläche mit einer Leuchteneinheit, weist wenigstens zwei Lichtleiterabschnitte mit jeweils einem ersten Ende und einem zweiten Ende auf, die an einem der Enden in einem Knotenpunkt zusammengeführt sind, der einen Auskoppelbereich bildet, in dem Licht austritt, das in den Lichtleiterabschnitten zum Knotenpunkt geführt ist. Wenigstens einer der Lichtleiterabschnitte weist zwischen Einkoppelpunkt und Knotenpunkt mehrere Auskoppelbereiche auf, die in solchen Abständen aufeinander folgen, dass ein im Wesentlichen homogener Helligkeitseindruck zwischen Einkoppelpunkt und Knotenpunkt entsteht.

Vorzugsweise ist wenigstens einer der Lichtleiterabschnitte an der Außenfläche angeordnet. Der andere Lichtleiterabschnitt kann innerhalb des Gehäuses verlaufen und durch die Rückwand verdeckt zum Kontenpunkt geführt sein.

Bevorzugt können zwei Lichtleiterabschnitte in der Außenfläche liegen und ein dritter Lichtleiterabschnitt unterhalb der Außenfläche verlaufen und im Knotenpunkt mit den anderen Lichtleiterabschnitten verbunden sein.

Die Helligkeit am Knotenpunkt ist mindestens gleich wie an Auskoppelbereichen am Lichtleiterabschnitt, vorzugsweise größer als dort.

Bevorzugt kann der Knotenpunkt an einem seitlichen Rand des Gehäuses angeordnet sein. Bildet die Leuchteneinheit ein Blinkersignal, so kann damit eine seitliche Erkennbarkeit des Blinkersignals sichergestellt sein.

Weitere Vorteile und Einzelheiten der Erfindung werden im Folgenden, anhand von in der Zeichnung beschriebenen bevorzugten Ausführungsbeispielen näher erläutert, ohne auf diese Ausführungsbeispiele beschränkt zu sein.

Es zeigen:
- Fig. 1 a-f: verschiedene bevorzugte Leuchteneinheiten mit je zwei Lichtleiterabschnitten und unterschiedlicher stirnseitiger Einkopplung von Leuchtmitteln;
- Fig. 2: eine bevorzugte Leuchteneinheit mit einer Glühlampe in einem Gehäuse;
- Fig. 3a,b: verschiedene Ansichten einer weiteren bevorzugten Leuchteneinheit mit seitlicher Einkopplung an Innenseiten von Lichtleiterabschnitten;
- Fig. 4a-c: verschiedene bevorzugte Leuchteneinheiten mit je zwei Lichtleiterabschnitten und verschiedenartiger unterseitiger Einkopplung ohne (a) und mit (b) Einkoppeloptik und mit Gehäuse (c);
- Fig. 5a-d: verschiedene Ausführungen von Leuchteneinheiten mit drei Lichtleiterabschnitten und unterschiedlicher Einkopplung von Leuchtmitteln (a-c) sowie mit Gehäuse (d); und
- Fig. 6a, b: einen bevorzugten Außenspiegel mit einer Leuchteneinheit mit drei Lichtleiterabschnitten in Draufsicht (a) und als Schnitt (b).

In den Figuren sind funktional gleich bleibende Elemente jeweils mit denselben Bezugszeichen beziffert. In den Figuren ist eine Reihe von strukturellen Elementen ähnlich ausgebildet, zu deren Beschreibung bei einzelnen Figuren zur Vermeidung unnötiger Wiederholungen auf die jeweils vorangegangenen Figurenbeschreibungen verwiesen wird.

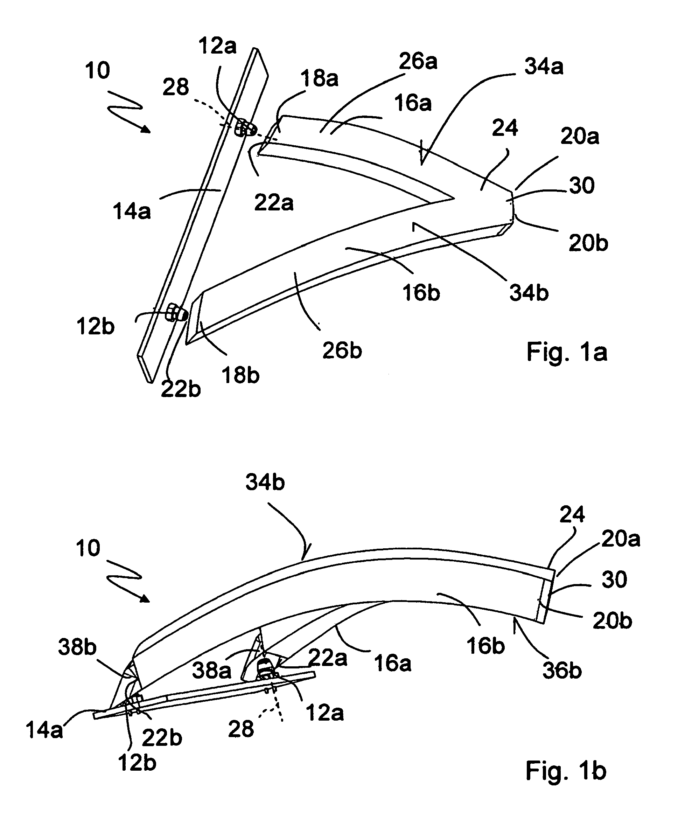

Die Figuren 1a bis 1f illustrieren jeweils eine Leuchteneinheit 10 mit je zwei Lichtleiterabschnitten 16a, 16b mit unterschiedlicher Einkopplung des Lichts von Leuchtmitteln 12a, 12b, die vorzugsweise als LEDs ausgebildet sind. Die Leuchteneinheiten 10 sind ohne Gehäuse dargestellt. Ein solches kann jedoch selbstverständlich vorgesehen sein.

Jeder Lichtleiterabschnitt 16a bzw. 16b weist jeweils ein erstes Ende 18a bzw.18b und ein zweites Ende 20a bzw. 20b auf. An ihrem zweiten Ende 20a und 20b sind die Lichtleiterabschnitte 16a, 16b in einem Knotenpunkt 30 zusammengeführt, der einen Auskoppelbereich 24 bildet, aus dem Licht austritt, das in den Lichtleiterabschnitten 16a und 16b vom Leuchtmittel 12a, 12b am ersten Ende 18a, 18b zum Knotenpunkt 30 am zweiten Ende 20a, 20b geführt ist. Das jeweils erste Ende 18a, 18b bildet in dieser Ausgestaltung jeweils einen Einkoppelpunkt 22a, 22b für Licht des Leuchtmittels 12a, 12b. Eine ebene Platine 14 ist Träger für die Leuchtmittel 12a, 12b.

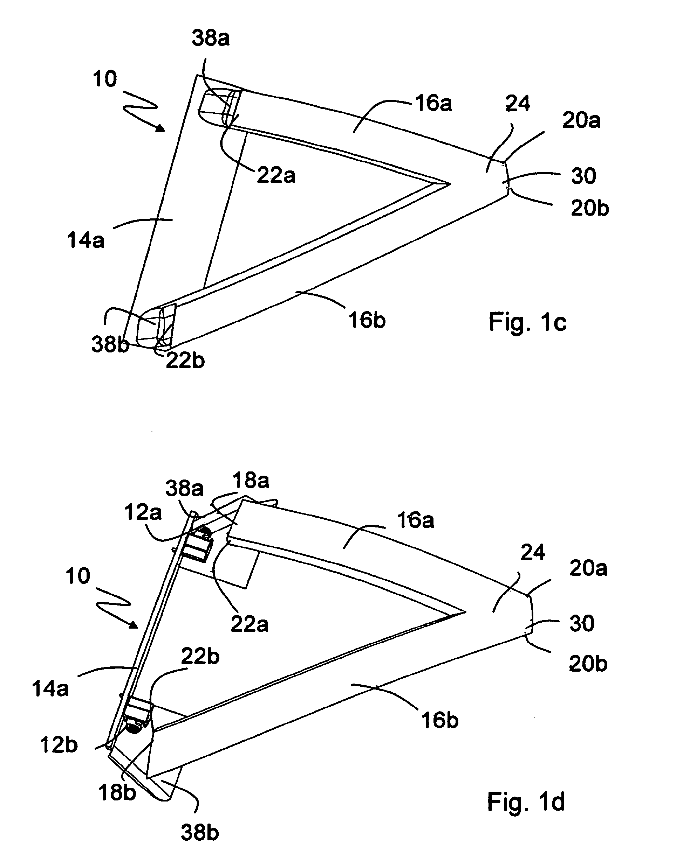

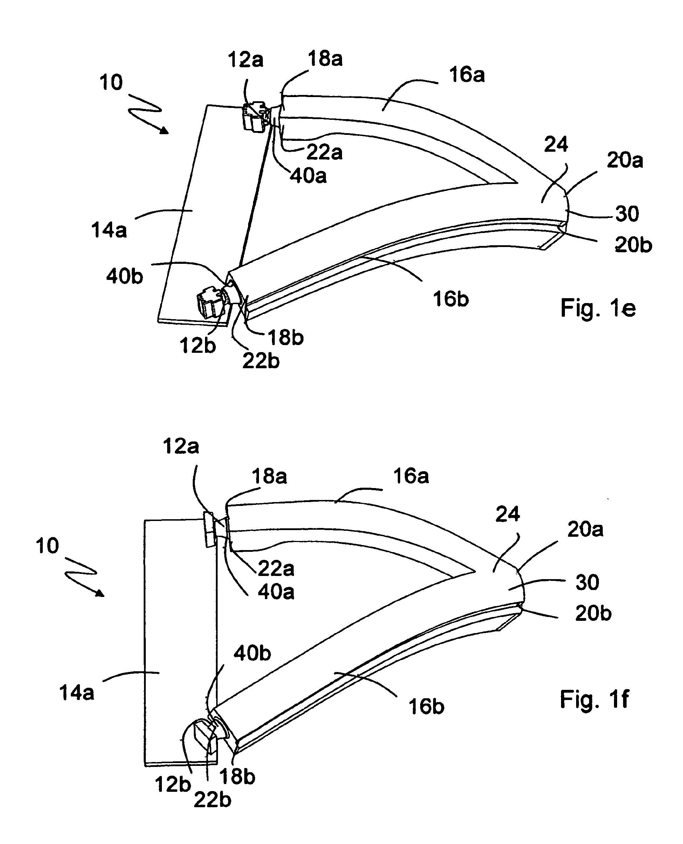

Eine direkte Einstrahlung in den jeweiligen Lichtleiterabschnitt 16a, 16b ohne weiteres Koppelmedium zeigt Figur 1a, während die Figuren 1e und 1f eine Einkopplung mit einem Koppelmittel 40a, 40b zeigen. Dazu ragt das Leuchtmittel 12a, 12b in ein Lichtleitermaterial hinein, das an die Stirnseite 32a bzw. 32b des Lichtleiterabschnitts 16a bzw. 16b angrenzt. Das Koppelmedium kann am Lichtleiterabschnitt 16a, 16b angeformt sein (Figur 1e) oder am Leuchtmittel 12a, 12b angeordnet sein (Figur 1f). Die Platine 14 ist ungefähr parallel (Figur 1a, 1d) oder senkrecht (Figur 1b, 1c, 1e, 1f) zur Stirnseite 32a, 32b angeordnet.

Die Figuren 1b bis 1d zeigen eine stirnseitige Einkopplung von Licht am jeweils ersten Ende 18a, 18b mittels Reflektoren 38a, 38b. Licht aus dem jeweiligen Leuchtmittel 12a, 12b wird über den Reflektor 38a, 38b in die Stirnseite 32a, 32b geleitet. Die Leuchtmittel 12a, 12b sind entweder liegend angeordnet und strahlen Licht zur Seite weg (Figur 1d), wobei die Platine 14 parallel zur Stirnseite 32a, 32b angeordnet ist, oder die Leuchtmittel 12a, 12b sind, wie in den Figuren 1b, 1c gezeigt ist, senkrecht auf der senkrecht zur Stirnseite 32a, 32b orientierten Platine 14 angeordnet und strahlen nach oben, in Richtung ihrer optischen Achse 28 in den Reflektor 38a, 38b hinein.

Die Leuchtmittel 12a, 12b sind vorzugsweise als LED ausgebildet und können stehend, liegend oder verkippt auf der Platine 14 angeordnet sein, um je nach Einbauwunsch günstig zur Stirnseite 32a, 32b des Lichtleiterabschnitts 16a, 16b orientiert zu sein.

Licht kann außer am Knotenpunkt 30 auch insbesondere von einer Oberseite 34a, 34b der Lichtleiterabschnitte 16a, 16b abgegeben werden. Dazu sind an der Oberseite 34a, 34b entsprechende, nicht zeichnerisch ausgeführte Modifikationen vorgesehen. Diese können beispielsweise so eng beabstandet sein, dass die Oberseite 34a, 34b praktisch homogen leuchtet und jeweils einen quasi-flächigen Auskoppelbereich 26a, 26b bildet. Solche Leuchteneinheiten 10 sind besonders für eine Blinksignalleuchteneinheit geeignet, die in einem Außenspiegel integriert ist. Durch die Verbindung der beiden Lichtleiterabschnitte 16a, 16b im Knotenpunkt 30 kann dort für eine hohe Lichtausbeute gesorgt werden, um beispielsweise gesetzliche Bestimmungen für eine derartige Anwendung der Leuchteneinheit 10 zu erfüllen.

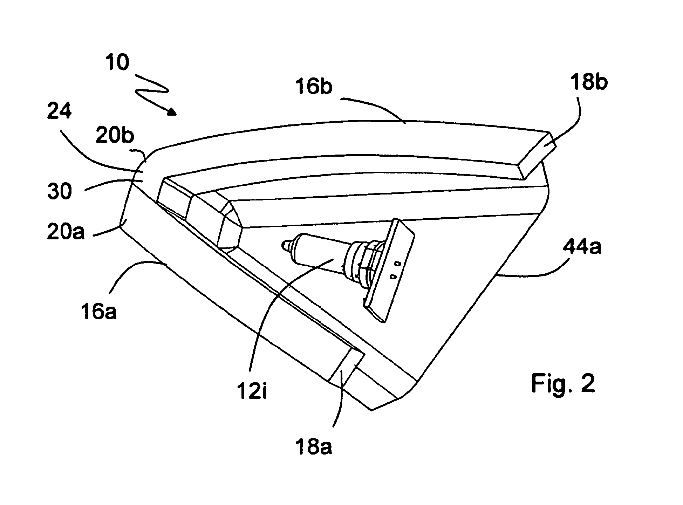

Dir Figur 2 zeigt eine Variante einer Leuchteneinheit 10, bei der eine Glühlampe als Leuchtmittel 12i vorgesehen ist, welche zwischen zwei an einem Knotenpunkt 30 zusammengeführten Lichtleiterabschnitten 16a, 16b liegend angeordnet ist und innerhalb eines Gehäuses 44a Richtung Knotenpunkt 30 ausgerichtet ist. Das Gehäuse 44a weist passend zu den Lichtleiterabschnitten 16a, 16b eine V-förmige Grundfläche auf. Die Lichtleiterabschnitte 16a, 16b sind auf einem Rand des Gehäuses 44a aufgesetzt, und das Gehäuse 44a ist vorzugsweise an seiner Innenseite reflektierend beschichtet, um möglichst viel Licht des Leuchtmittels 12i in die Lichtleiterabschnitte 16a, 16b einzukoppeln. Die Lichtleiterabschnitte 16a, 16b erstrecken sich von einem ersten Ende 18a bzw. 18b zu einem zweiten Ende 20a bzw. 20b, die den Knotenpunkt 30 bilden, und sind insgesamt V-förmig ausgebildet. Einkoppelpunkte für das Licht bildet praktisch die ganze vom Leuchtmittel 12i direkt und vom Gehäuse 44a indirekt angestrahlte Fläche der Lichtleiterabschnitte 16a, 16b. Das Gehäuse 44a wird von einer nicht dargestellten Abdeckung verschlossen, wobei die Lichteiterabschnitte 16a, 16b durch die Abdeckung durchstrahlen oder in entsprechende Aussparungen der Abdeckung angeordnet sind. Der V-förmige innere Bereich, in dem das Leuchtmittel 12i angeordnet ist, kann durch ein lichtundurchlässiges Element abgedeckt sein, so dass beispielsweise nur die Lichtleiterabschnitte 16a, 16b erkennbar sind.

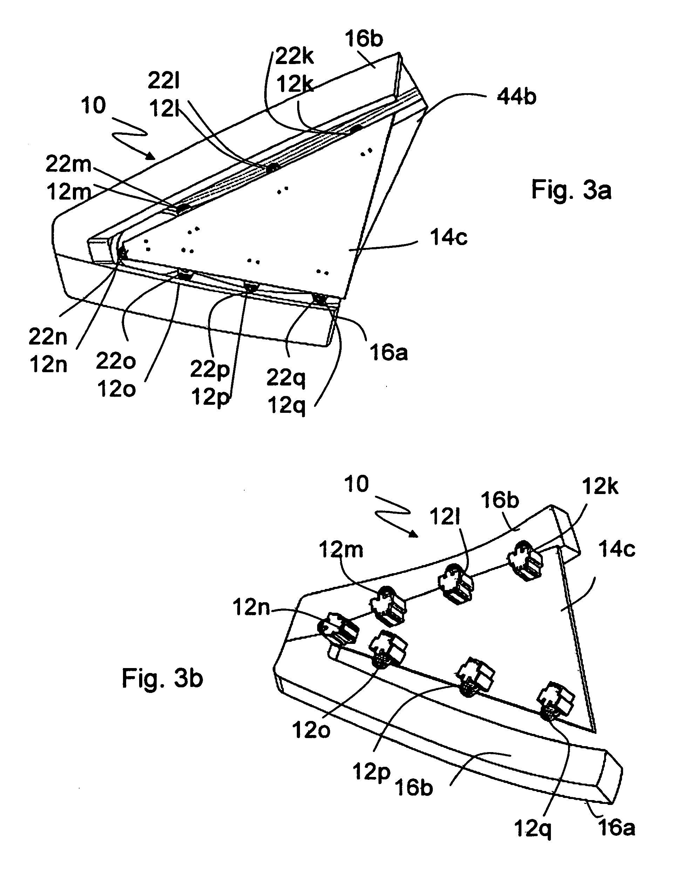

Eine weitere Variante einer Leuchteneinheit 10 zeigen die Figuren 3a und 3b in verschiedenen Detailansichten. Die Ausgestaltung ähnelt derjenigen in Figur 2 mit einem Gehäuse 44b, welches eine dreieckige Grundfläche aufweist, und auf dessen hochgezogenem Rand Lichtleiterabschnitte 16a und 16b angeordnet sind. Die Lichtleiterabschnitte 16a, 16b erstrecken sich von einem ersten Ende 18a bzw. 18b zu einem zweiten Ende 20a bzw. 20b, die den Knotenpunkt 30 bilden, und sind insgesamt V-förmig ausgebildet.

Auf einer dreieckigen Platine 14c in einer Aussparung zwischen den Lichtleiterabschnitte 16a, 16b sind Leuchtmittel 12k-12q an deren Rändern angeordnet und zu Innenseiten der Lichtleiterabschnitte 16a, 16b hin gerichtet. Die Platine 14c mit den Leuchtmitteln 12k-12q befindet sich unterhalb der Unterseite der Lichtleiterabschnitte 16a, 16b. Die Ansicht in Figur 3a zeigt eine Draufsicht auf das offene Gehäuse 44c; die Leuchtmittel 12k-12q sind beispielhaft auf der dem Betrachter abgewandten Unterseite der Platine 14c angeordnet. Auch hier kann das Gehäuse 44c innen reflektierend beschichtet sein, um Streuverluste zu vermeiden. Figur 3b zeigt eine Ansicht auf die Unterseite der Platine 14c mit den als liegende und zur Seite abstrahlende LEDs ausgebildeten Leuchtmitteln 12k-12q, sowie den im Bild hinter der Platine 14 c angeordneten Lichtleiterabschnitten 16a, 16b.

Das Gehäuse 44b wird von einer nicht dargestellten Abdeckung verschlossen, wobei die Lichteiterabschnitte 16a, 16b durch die Abdeckung durchstrahlen oder in entsprechende Aussparungen der Abdeckung angeordnet sind.

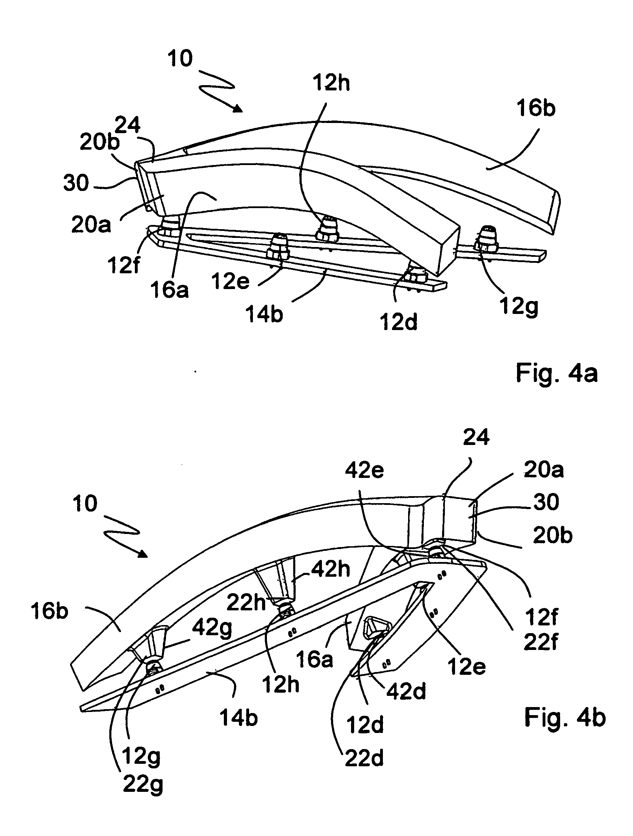

Die Figuren 4a bis 4c zeigen alternative Ausgestaltungen von bevorzugten Leuchteneinheiten 10, bei denen Leuchtmittel 12d-12h vorgesehen sind, die nicht an einer Stirnseite 16a, 16b, sondern an einer Unterseite 36a, 36b ihre Einkoppelpunkte 32d-32h aufweisen. Die Einkopplung erfolgt senkrecht zu einer Längserstreckung zwischen dem ersten Ende 18a bzw. 18b und dem zweiten Ende 20a bzw. 20c des Lichtleiterabschnitts 16a bzw. 16b. Gleichwohl wird deren Licht innerhalb der Lichtleiterabschnitte 16a, 16b zum Knotenpunkt 30 transportiert. Im Fall des Leuchtmittels 12f am Knotenpunkt 30 kann auch eine direkte Durchstrahlung vorgesehen sein, so dass das Licht des Leuchtmittels 12f direkt in Abstrahlrichtung durch das Lichtleitermaterial durchtreten kann, oder zumindest eine nur sehr kurze Strecke innerhalb des Lichtleitermaterials zum Knotenpunkt 30 zurückgelegt werden muss.

Die Leuchtmittel 12d-12h sind auf einer Platine 14b angeordnet, welche wie die Lichtleiterabschnitte 16a, 16b eine V-Form aufweist. Figur 4a zeigt eine Einkopplung ohne weitere Einkoppelmedien, Figur 4b eine Einkopplung mittels Koppelmitteln 42d-42h, die in Form von zapfenförmigen Koppeloptiken an Einkoppelpunkten 22d-22h an einer Unterseite 36a, 36b der Lichtleiterabschnitte 16a, 16b angeordnet sind. Die Lichtleiterabschnitte 16a, 16b sind leicht nach oben gekrümmt, in der Form beispielsweise eines Außenspiegelgehäuses. Die Koppelmittel 42d-42h gleichen die unterschiedlichen Abstände der Unterseiten 36a, 36b der Lichtleiterabschnitte 16a, 16b zur ebenen Platine 14a und damit zu den Leuchtmitteln 12d-12h aus.

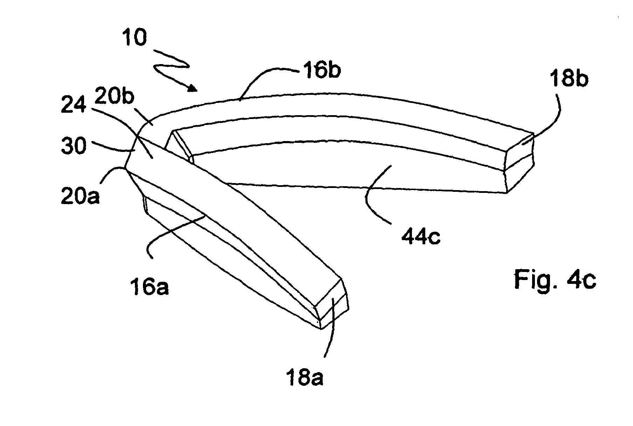

Die Platine 14b taucht in Figur 4c in ein gleichfalls V-förmiges Gehäuse 44c ein und wird von diesem verdeckt. Das Gehäuse 44c kann beispielsweise innen reflektierend beschichtet sein, um Strahlungsverluste der Leuchtmittel 12d-12h zu vermindern. Die Leuchteneinheit 10 weist hier insgesamt eine Pfeilform auf.

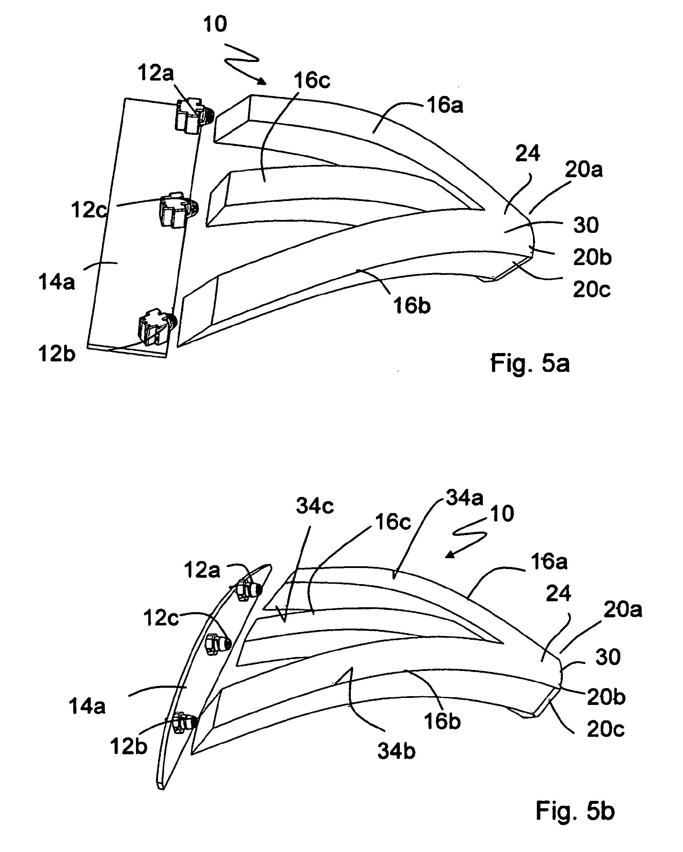

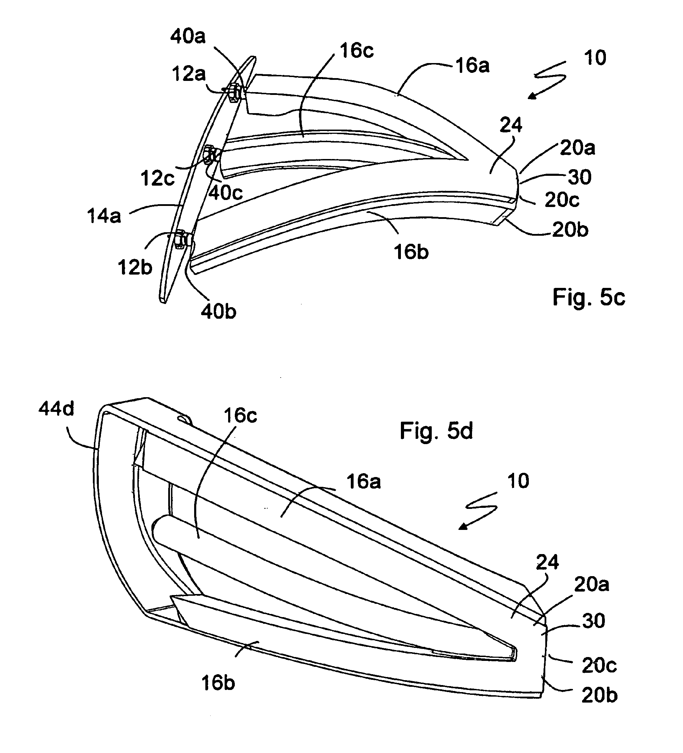

Eine weitere bevorzugte Ausgestaltung einer Leuchteneinheit 10 zeigen die Figuren 5a bis 5d. Hier liegen zwei Lichtleiterabschnitte 16a, 16b in einer - hier gekrümmten - Fläche, und ein dritter Lichtleiterabschnitt 16c verläuft außerhalb bzw. unterhalb der Fläche. Die Fläche ist beispielsweise einem Gehäuse eines Außenspiegels nachgebildet, in welches die Leuchteneinheit 10 eingesetzt werden kann, oder einer Kontur eines anderen Karosserieteils eines Fahrzeugs oder eines anderen Körpers, in den die Leuchteneinheit 10 eingesetzt werden soll. Die Lichtleiterabschnitte 16a, 16b erstrecken sich von einem ersten Ende 18a, 18b bzw. 18c zu einem zweiten Ende 20a, 20b bzw. 20c, die den Knotenpunkt 30 bilden, und bilden insgesamt eine V-förmige Grundfläche. Der Querschnitt des dritten Lichtleiterabschnitts 16c kann rund sein (Figuren 5c, 5d) oder eckig (Figuren 5a, 5b), während die Lichtleiterabschnitte 16a, 16b vorzugsweise einen eckigen Querschnitt aufweisen, was für eine Abdeckung mit einer Lichtscheibe, einer dekorativen lichtundurchlässigen Abdeckung oder dergleichen, vorteilhaft ist. Der dritte Lichtleiterabschnitt 16c kann beispielsweise auch sehr viel kürzer ausgebildet sein als die beiden Lichtleiterabschnitte 16a, 16b.

Im Knotenpunkt 30 sind alle Lichtleiterabschnitte 16a, 16b, 16c miteinander verbunden und bilden eine Auskoppelbereich 24, aus dem Licht von Leuchtmitteln 12a, 12b, 12c auskoppelbar ist, deren Licht jeweils in eine Stirnseite 32a, 32b bzw. 32c des jeweiligen Lichtleiterabschnitts 16a, 16b bzw. 16c eingekoppelt ist. Die Stirnseite 32a, 32b bzw. 32b bildet jeweils einen Einkoppelpunkt 22a, 22b, 22c des Lichtleiterabschnitts 16a, 16b bzw. 16c.

Wie in den Ausführungsbeispielen der Figuren 1a-1f können die vorzugsweise als LED ausgebildeten Leuchtmittel 12a-12c auf einer gemeinsamen, ebenen Platine 14a angeordnet sein, welche parallel (Figur 5c), senkrecht (Figur 5a oder schräg (Figur 5b) zur Stirnseite 32a, 32b, 32c angeordnet sind. Die Leuchtmittel 12a, 12b, 12c können stehend (Figur 5a, 5c), liegend (Figur 5b) oder auch schräg auf der Platine 14a angeordnet sein. Die Leuchtmittel 12a, 12b, 12c können über Koppelmittel 40a, 40b, 40c in die jeweilige Stirnseite 32a, 32b, 32c (Figur 5c) hineinragen, oder ohne weitere Koppelmittel direkt in Richtung ihrer optischen Achse 28 in die jeweilige Stirnseite 32a, 32b, 32c (Figur 5a, 5b) einstrahlen.

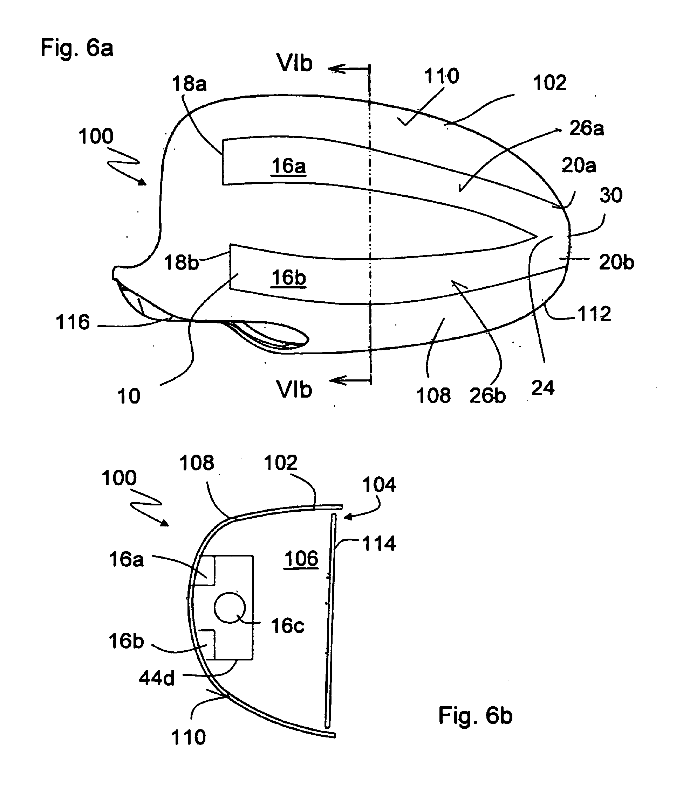

Die Figur 5d zeigt die Leuchteneinheit 10 eingebaut in ein Gehäuse 44d, das ohne Abdeckung dargestellt ist. Der Einfachheit halber sind keine Leuchtmittel dargestellt. Auch hier kann das Gehäuse 44d innen reflektierend beschichtet sein. Gegebenenfalls kann eine farbige Lackierung vorgesehen sein, was beim Fahrzeugeinsatz günstig ist. Eine Gehäusekante ist bis zu den Lichtleiterabschnitten 16a, 16b hochgezogen. Das Gehäuse 44d kann beispielsweise in einen Außenspiegel eingesetzt werden, wie in den Figuren 6a und 6b dargestellt ist.

Die Figuren 6a und 6b illustrieren beispielhaft einen bevorzugten Außenspiegel 100 eines Fahrzeugs mit einer im montierten Zustand nach rückwärts gerichteten Öffnung 104 in einem Gehäuse 102 mit einem Hohlraum 106, in den ein Spiegel 114 aufnehmbar ist. Eine nach vorne gerichtete Rückwand 108 begrenzt den Hohlraum 106. Die Rückwand 108 weist eine Außenfläche 110 mit einer Leuchteneinheit 10 auf, die beispielsweise einer Ausgestaltung nach Figur 5 nachempfunden ist und drei Lichtleiterabschnitte 16a, 16b, 16c in einem Gehäuse 44d aufweist, von denen zwei Lichtleiterabschnitte 16a, 16b in der Außenfläche 110 bzw. der Rückwand 108 verlaufen und der dritte Lichtleiterabschnitt 16c unterhalb der Außenfläche 110 der Rückwand 108 im Hohlraum 106 verläuft.

Die Lichtleiterabschnitte 16a, 16b, 16c erstrecken sich von ihrem jeweiligen ersten Ende 18a, 18b, 18c zu ihrem zweiten Ende 20a, 20b, 20c, wo sie in einem Knotenpunkt 30 am seitlichen Rand 112 des Außenspiegels 100 zusammenstoßen, der eine Auskoppelbereich 24 bildet, an dem Licht von Leuchtmitteln an den Stirnseiten und/oder entlang der Lichtleiterabschnitte 16a, 16b, 16c einstrahlenden Leuchtmitteln austritt. Ferner kann auch an der Oberseite 34a, 34b der beiden außen liegenden Lichtleiterabschnitte 16a, 16b Licht an zusätzlichen Auskoppelbereichen austreten, die vorzugsweise so dicht, besonders bevorzugt im Abstand von etwa 1 mm, angeordnet sind, dass die ganze außen liegende Oberseite 34a, 34b einen möglichst homogenen Auskoppelbereich 26a, 26b bildet.

Die Helligkeit ist am Knotenpunkt 30 vorzugsweise größer als an den anderen Auskoppelbereichen 26a, 26b am Lichtleiterabschnitt 16a, 16b.

### Bezugszeichenliste

- 10: Leuchteneinheit
- 12a-q: Leuchtmittel
- 14a,b,c: Platine
- 16a-c: Lichtleiterabschnitt
- 18a-c: erstes Ende
- 20a-c: zweites Ende
- 22a-q: Einkoppelpunkt
- 24: Auskoppelbereich
- 26a-e: Auskoppelbereich
- 28: optische Achse
- 30: Knotenpunkt
- 32a-c: Stirnseite
- 34a-c: Oberseite
- 36a, b: Unterseite
- 38a, b: Reflektor
- 40a, b: Koppelstutzen
- 42a-h: Koppelstutzen
- 44a-d: Lichtleitergehäuse
- 100: Außenspiegel
- 102: Gehäuse
- 104: Öffnung
- 106: Hohlraum
- 108: Rückseite
- 110: Außenfläche
- 112: Rand
- 114: Spiegel
- 116: Befestigung

## Patentansprüche

1. Blinkleuchteneinheit eines Fahrzeugs mit einem oder mehreren Leuchtmitteln (12a-12q), bei der Licht in wenigstens zwei aus einem Lichtleitermaterial gebildeten Lichtleiterabschnitten (16a-16c) mit jeweils einem ersten Ende (18a-18c) und einem zweiten Ende (20a-20c) führbar ist, **dadurch gekennzeichnet, dass** die wenigstens zwei Lichtleiterabschnitte (146a-16c) an einem ihrer Enden (20a-20c) in einem Knotenpunkt (30) zusammengeführt sind, der einen Auskoppelbereich (24) bildet, in dem Licht austritt, das in den Lichtleiterabschnitten (16a-16c) zum Knotenpunkt (30) geführt ist, wobei wenigstens einer der Lichtleiterabschnitte (16a-16c) einen Einkoppelpunkt (22a-22q) für ein Leuchtmittel (12a-12q) entfernt vom Knotenpunkt (30) aufweist und der Lichtleiterabschnitt (16a-16c) zwischen einem Einkoppelpunkt (22a-22q) und dem Knotenpunkt (30) mehrere Auskoppelbereiche (26a-26c) aufweist, die in solchen Abständen aufeinander folgen, dass ein im Wesentlichen homogener Helligkeitseindruck zwischen Einkoppelpunkt (22a-22q) und Knotenpunkt (30) entsteht.

2. Blinkleuchteneinheit nach Anspruch 1, **dadurch gekennzeichnet, dass** der Einkoppelpunkt (22a-22c) an dem Ende (18a-18c) angeordnet ist, welches vom Knotenpunkt (30) entfernt ist.

3. Blinkleuchteneinheit nach Anspruch 1 oder 2, **dadurch gekennzeichnet, dass** dass eine Einkopplung von Licht direkt am Knotenpunkt (30) vorgesehen ist.

4. Blinkleuchteneinheit nach einem der vorhergehenden Ansprüche, **dadurch gekennzeichnet, dass** wenigstens ein Einkoppelpunkt (22d-22q) für ein Leuchtmittel (12d-12q) senkrecht zu einer Längserstreckung zwischen dem ersten und zweiten Ende (18a-18c; 20a-20c) des Lichtleiterabschnitts (16a-16c) vorgesehen ist.

5. Blinkleuchteneinheit nach einem der vorhergehenden Ansprüche, **dadurch gekennzeichnet, dass** die Helligkeit am Knotenpunkt (30) mindestens gleich oder größer ist als an Auskoppelbereichen (26a-26c) am Lichtleiterabschnitt (16a-16c).

6. Blinkleuchteneinheit nach einem der vorhergehenden Ansprüche, **dadurch gekennzeichnet, dass** zwei Lichtleiterabschnitte (16a, 16b) in einer Fläche (108) liegen und ein dritter Lichtleiterabschnitt (16c) unterhalb der Fläche (108) verläuft und im Knotenpunkt (30) mit den anderen Lichtleiterabschnitten (16a, 16b) verbunden ist.

7. Blinkleuchteneinheit nach einem der vorhergehenden Ansprüche, **dadurch gekennzeichnet, dass** das Leuchtmittel (12a-12q) am Einkoppelpunkt (22a-22q) in seiner Lichtaustrittsrichtung entlang seiner optischen Achse (28) direkt in eine Stirnseite (32a-32c) des Lichtleiterabschnitts (16a-18c) einstrahlt.

8. Blinkleuchteneinheit nach einem der vorhergehenden Ansprüche, **dadurch gekennzeichnet, dass** das Leuchtmittel (12a-12c) am Einkoppelpunkt (22a-22c) in eine Stirnseite (32a-32c) des Lichtleiterabschnitts (16a-16c) hineinragt.

9. Blinkleuchteneinheit nach einem der vorhergehenden Ansprüche, **dadurch gekennzeichnet, dass** das Leuchtmittel (12a-12c) am Einkoppelpunkt (22a-22c) über einen Reflektor (38a, 38b) in eine Stirnseite (32a-32c) des Lichtleiterabschnitts (16a, 16b, 16c) einstrahlt.

10. Blinkleuchteneinheit nach einem der vorhergehenden Ansprüche, **dadurch gekennzeichnet, dass** das Leuchtmittel (12a-12q) am Einkoppelpunkt (22a-22q) in Lichtleitermaterial hineinragt, das an den Lichtleiterabschnitt (16a-16c) angrenzt.

11. Außenspiegel eines Fahrzeugs mit einer im montierten Zustand nach rückwärts gerichteten Öffnung (104) in einem Gehäuse (102), das einen Hohlraum (106) umgibt, in dem ein Spiegel (114) aufnehmbar ist, sowie eine nach vorne gerichtete, den Hohlraum (106) begrenzende Rückwand (108) mit einer Außenfläche (110) mit einer Blinkleuchteneinheit (10), insbesondere nach wenigstens einem der vorhergehenden Ansprüche, wobei Licht in wenigstens zwei Lichtleiterabschnitten (16a-16c) mit jeweils einem ersten Ende (18a-18c) und einem zweiten Ende (20a-20c) geführt ist, **dadurch gekennzeichnet, dass** die wenigstens zwei Lichtleiterabschnitte (16a-16c) an einem ihrer Enden (20a-20c) in einem Knotenpunkt (30) zusammengeführt sind, der einen Auskoppelbereich (24) bildet, in dem Licht austritt, das in den Lichtleiterabschnitten (16a-16c) zum Knotenpunkt (30) geführt ist, wobei wenigstens einer der Lichtleiterabschnitte (16a-16c) einen Einkoppelpunkt (22a-22q) für ein Leuchtmittel (12a-12q) entfernt vom Knotenpunkt (30) aufweist und der Lichtleiterabschnitt (16a-16c) zwischen dem Einkoppelpunkt (22a-22q) und dem Knotenpunkt (30) mehrere Auskoppelbereiche (26a-26c) aufweist, die in solchen Abständen aufeinander folgen, dass ein im Wesentlichen homogener Helligkeitseindruck zwischen Einkoppelpunkt (22a-22q) und Knotenpunkt (30) entsteht.

12. Außenspiegel nach Anspruch 11, **dadurch gekennzeichnet, dass** wenigstens einer der Lichtleiterabschnitte (16a-16c) in der Außenfläche (110) angeordnet ist.

13. Außenspiegel nach Anspruch 11 oder 12, **dadurch gekennzeichnet, dass** ein Lichtleiterabschnitt (16c) durch die Rückwand (108) verdeckt zum Kontenpunkt (30) geführt ist.

14. Außenspiegel nach einem der Ansprüche 11 bis 13, **dadurch gekennzeichnet, dass** zwei Lichtleiterabschnitte (16a, 16b) in der Außenfläche (108) liegen und ein dritter Lichtleiterabschnitt (16c) unterhalb der Außenfläche (108) verläuft und im Knotenpunkt (30) mit den anderen Lichtleiterabschnitten (16a, 16b) verbunden ist.

15. Außenspiegel nach einem der Ansprüche 11 bis 14, **dadurch gekennzeichnet, dass** am Knotenpunkt (30) eine direkte Einkopplung von Licht vorgesehen ist.

16. Außenspiegel nach einem der Ansprüche 11 bis 15, **dadurch gekennzeichnet, dass** die Helligkeit am Knotenpunkt (30) mindestens gleich ist wie an Auskoppelbereichen (26a-26c) am Lichtleiterabschnitt (16a-16c).

17. Außenspiegel nach einem der Ansprüche 11 bis 16, **dadurch gekennzeichnet, dass** der Knotenpunkt (30) an einem seitlichen Rand (112) des Gehäuses (102) angeordnet ist.

## Claims

1. A signal light unit for a vehicle, comprising one or plural illuminants (12a - 92q), in which light can be transmitted in at least two light conductor sections (16a - 16c), made of a light conductor material, each comprising a first end (18a -18c) and a second end (20a 20c), wherein the at least two light conductor sections (16a- 16c) are joined at one of their ends (20a-20c) in a node (30), which forms an uncoupling portion (24), where light exists, which is transmitted in the light conductor sections (16a -16c) to the node (30), wherein at least one of the light conductor sections (16a - 16c) comprises a coupling point (22a - 22q) for an illuminant (12a - 12q) remote from the node (30) and the light conductor section (16a - 16c) comprises a plurality of uncoupling portions (26a - 26c) between a coupling point (22a - 22q) and the node (30), wherein said uncoupling portions are spaced in sequence, so that a substantially homogenous brightness impression is generated between the coupling point (22a - 22q) and the node (30).

2. A signal light unit according to claim 1, wherein the coupling point (22a - 22c) is disposed at the end (18a - 18c), which is remote from the node (30).

3. A signal light unit according to claim 1 or 2, wherein light coupling is provided directly at the node (30).

4. A signal light unit according to one of the preceding claims, wherein at least one coupling point (22d - 22q) is provided for an illuminant (12d - 12q), perpendicular to a longitudinal extension between the first and the second end (18a-18c; 20a-20c) of the light conductor section (16a- 16c).

5. A signal light unit according to one of the preceding claims, wherein the brightness at the node (30) is at least equal to or greater than at the uncoupling portions (26a - 26c) at the light conductor section (16a - 16c).

6. A signal light unit according to one of the preceding claims, wherein two light conductor sections (16a, 16b) are disposed in a plane (108) and a third light conductor section (16c) extends below the surface (108) and is connected in the node (30) to the other light conductor sections (16a, 16b).

7. A signal light unit according to one of the preceding claims, wherein the illuminant (12a - 12q) radiates light at the coupling point (22a - 22q) in its light emission direction along its optical axis (28) directly into the front face (32a - 32c) of the light conductor section (16a - 16c).

8. A signal light unit according to one of the preceding claims, wherein the illuminant (12a - 12c) protrudes at the coupling point (22a - 22c) into a front face (32a - 32c) of the light conductor section (16a - 16c).

9. A signal light unit according to one of the preceding claims, wherein the illuminant (12a - 12c) radiates light at the coupling point (22a - 22c) through a reflector (38a, 38b) into a face side (32a - 32c) of the light conductor section (16a, 16b, 16c).

10. A signal light unit according to one of the preceding claims, wherein the illuminant (12a - 12q) protrudes at the coupling point (22a - 22q) into light conductor material, which abuts to the light conductor section (16a - 16c),

11. An exterior mirror of a vehicle comprising an opening (104) in a housing (102), facing backward in assembled state, wherein said housing surrounds a cavity (106), in which a mirror (114) can be received, and comprises a forward facing rear wall (108), defining the cavity (106), wherein said rear wall comprises an exterior surface (110), comprising a signal light unit (10), in particular according to at least one of the preceding claims, wherein light is transmitted in at least two light conductor sections (16a - 16c), each comprising a first end (18a - 18c) and a second end (20a - 20c), wherein the at least two light conductor sections (16a - 16c) are joined in a node (30) at one of their ends (20a - 20c), wherein said node forms an uncoupling portion (24), in which light exists, which is transmitted in the light conductor sections (16a - 16c) to the node (30), when at least one of the light conductor sections (16a - 16c) comprises a coupling point (22a - 22q) for an illuminant (12a - 12q) remote from the node (30), and the light conductor section (16a - 16c) between the coupling point (22a - 22q) and the node (30) comprises several uncoupling portions (26a - 26c), which are sequentially spaced from one another, so that a substantially homogenous brightness pressure between the coupling point (22a - 22q) and the node (30) is generated.

12. An exterior mirror according to claim 11, wherein at least one of the light conductor sections (16a - 16c) is disposed in the exterior surface (110).

13. An exterior mirror according to claim 11 or 12, wherein a light conductor section (16c) is run covered by the rear wall (108) to the node (30).

14. An exterior mirror according to one of the claims 1 through 13, wherein two light conductor sections (16a, 16b) are disposed in the exterior surface (108) and a third light conductor section (16c) extends below the exterior surface (108) and is connected to other light conductor sections (16a, 16b) in the node (30).

15. An exterior mirror according to one of the claims 11 through 14, wherein a direct coupling of light is provided at the node (30).

16. An exterior mirror according to one of the claims 11 through 15, wherein the brightness at the node (30) is at least equal to brightness in the uncoupling portions (26a - 26c) at the light conductor section (16a - 16c).

17. An exterior mirror according to one of the claims 11 through 16, wherein the node (30) is disposed at a lateral rim (112) of the housing (102).

## Revendications

1. Dispositif d'éclairage d'indicateur de direction d'un véhicule avec un ou plusieurs moyens d'éclairage (12a-12q), où la lumière peut être guidée par au moins deux sections (16a-16c) guides de lumière composées d'un matériau conducteur de lumière ayant chacune une première extrémité (18a-18c) et une seconde extrémité (20a-20c), **caractérisé en ce que** les au moins deux sections (16a-16c) guides de lumière sont raccordées à l'une de leurs extrémités (20a-20c) à un point de jonction (30) qui forme une zone d'émission (24) d'où la lumière, guidée par les sections guides de lumière (16a-16c) vers le point de jonction (30), est émise, sachant qu'au moins une des sections (16a-16c) guides de lumière possède un point d'injection (22a-22q) pour un moyen d'éclairage (12a-12q) distant du point de jonction (30), et la section (16a-16c) guide de lumière présente plusieurs zones d'émission (26a-26c), entre un point d'injection (22a-22q) et le point de jonction (30), se succédant dans de tels intervalles qu'une impression de luminosité sensiblement homogène entre le point d'injection (22a-22q) et le point de jonction (30) est obtenue.

2. Dispositif d'éclairage d'indicateur de direction selon la revendication 1, **caractérisé en ce que** le point d'injection (22a-22c) est disposé à l'extrémité (18a-18c), distant du point de jonction (30).

3. Dispositif d'éclairage d'indicateur de direction selon la revendication 1 ou 2, **caractérisé en ce qu'**une injection de lumière est prévue directement au point de jonction (30).

4. Dispositif d'éclairage d'indicateur de direction selon l'une des revendications précédentes, **caractérisé en ce qu'il** est prévu au moins un point d'injection (22d-22q) pour un moyen d'éclairage (12d-12q), perpendiculaire à une extension longitudinale entre la première et la seconde extrémité (18a-18c, 20a-20c) de la section (16a-16c) guide de lumière.

5. Dispositif d'éclairage d'indicateur de direction selon l'une des revendications précédentes, **caractérisé en ce que** la luminosité au point de jonction (30) est au moins égale ou supérieure à celle des zones d'émission (26a-26c) de la section (16a-16c) guide de lumière.

6. Dispositif d'éclairage d'indicateur de direction selon l'une des revendications précédentes, **caractérisé en ce que** deux sections (16a, 16b) guides de lumière sont disposées dans une surface (108), et une troisième section (16c) guide de lumière s'étend au-dessous de la surface (108) et est reliée aux autres sections (16a, 16b) guides de lumière au point de jonction (30).

7. Dispositif d'éclairage d'indicateur de direction selon l'une des revendications précédentes, **caractérisé en ce que** le moyen d'éclairage (12a-12q), au point d'injection (22a-22q), dans sa direction de sortie de la lumière le long de son axe optique (28), rayonne directement dans une face frontale (32a-32c) de la section (16a-16c) guide de lumière.

8. Dispositif d'éclairage d'indicateur de direction selon l'une des revendications précédentes, **caractérisé en ce que** le moyen d'éclairage (12a-12c), au point d'injection (22a-22c), s'engage dans une face frontale (32a-32c) de la section (16a-16c) guide de lumière.

9. Dispositif d'éclairage d'indicateur de direction selon l'une des revendications précédentes, **caractérisé en ce que** le moyen d'éclairage (12a-12c), au point d'injection (22a-22c), rayonne par le biais d'un réflecteur (38a, 38b) dans une face frontale (32a-32c) de la section (16a, 16b, 16c) guide de lumière.

10. Dispositif d'éclairage d'indicateur de direction selon l'une des revendications précédentes, **caractérisé en ce que** le moyen d'éclairage (12a-12q), au point d'injection (22a-22q), s'engage dans un matériau conducteur de lumière adjacent à la section (16a-16c) guide de lumière.

11. Rétroviseur extérieur d'un véhicule comprenant, à l'état monté, une ouverture (104) dirigée vers l'arrière dans un boîtier (102) entourant une cavité (106), dans laquelle un miroir (114) peut être logé, ainsi que, dirigée vers l'avant, une paroi arrière (108) délimitant la cavité (106) ayant une surface extérieure (110) avec un dispositif d'éclairage d'indicateur de direction (10), en particulier selon au moins une des revendications précédentes, la lumière étant guidée par au moins deux sections (16a-16c) guides de lumière ayant chacune une première extrémité (18a-18c) et une seconde extrémité (20a-20c), **caractérisé en ce que** les au moins deux sections (16a-16c) guides de lumière sont raccordées à l'une de leurs extrémités (20a-20c) à un point de jonction (30) qui forme une zone d'émission (24) d'où la lumière, guidée par les sections guides de lumière (16a-16c) vers le point de jonction (30), est émise, sachant qu'au moins une des sections (16a-16c) guides de lumière possède un point d'injection (22a-22q) pour un moyen d'éclairage (12a-12q) distant du point de jonction (30), et la section (16a-16c) guide de lumière présente plusieurs zones d'émission (26a-26c), entre un point d'injection (22a-22q) et le point de jonction (30), se succédant dans de tels intervalles qu'une impression de luminosité sensiblement homogène entre le point d'injection (22a-22q) et le point de jonction (30) est obtenue.

12. Rétroviseur extérieur selon la revendication 11, **caractérisé en ce qu'**au moins l'une des sections (16a-16c) guides de lumière est disposée dans la surface extérieure (110).

13. Rétroviseur extérieur selon la revendication 11 ou 12, **caractérisé en ce qu'**une section (16c) guide de lumière est conduite au point de jonction (30) masquée par la paroi arrière (108).

14. Rétroviseur extérieur selon l'une des revendications 11 à 13, **caractérisé en ce que** deux sections (16a, 16b) guides de lumière sont disposées dans la surface extérieure (108), et une troisième section (16c) guide de lumière s'étend au-dessous de la surface extérieure (108) et est reliée aux autres sections (16a, 16b) guides de lumière au point de jonction (30).

15. Rétroviseur extérieur selon l'une des revendications 11 à 14, **caractérisé en ce qu**'une injection directe de lumière est prévue au point de jonction (30).

16. Rétroviseur extérieur selon l'une des revendications 11 à 15, **caractérisé en ce que** la luminosité au point de jonction (30) est au moins égale à celle des zones d'émission (26a-26c) des sections (16a-16c) guides de lumière.

17. Rétroviseur extérieur selon l'une des revendications 11 à 18, **caractérisé en ce que** le point de jonction (30) est disposé sur un bord latéral (112) du boîtier (102).
